# EUROPEAN PATENT APPLICATION

(11) **EP 4 678 345 A1**
(43) Date of publication of application: **14.01.2026**
(21) Application number: 23932713.3
(22) Date of filing: 18.09.2023
(51) Int. Cl.: B25J 9/16

(54) **REGION DIVISION METHOD, APPARATUS AND COMPUTER-READABLE STORAGE MEDIUM**

(30) Priority: 13.04.2023 CN 202310394123; 13.04.2023 CN 202310409165
(71) Applicant: Shenzhen LDrobot Co., Ltd., Shenzhen, Guangdong 518000 (CN)
(72) Inventor: LI, Shaohai, Shenzhen, Guangdong 518000 (CN); LI, Ang, Shenzhen, Guangdong 518000 (CN); GUO, Gaihua, Shenzhen, Guangdong 518000 (CN); ZHOU, Wei, Shenzhen, Guangdong 518000 (CN)
(74) Representative: impuls legal PartG mbB
(86) International application number: PCT/CN2023/119428
(87) International publication number: WO 2024/212441

(57) **Abstract**

The embodiments of the present application disclose an area division method, an apparatus and a computer-readable storage medium, which are used for improving robot positioning precision. The method in the embodiments of the present application comprises: on the basis of prearranged wires, determining a preset area range; and, on the basis of the wires, dividing the preset area range into a plurality of target sub-areas, of which each target sub-area contains a wire.

## Description

### CROSS-REFERENCE TO RELATED APPLICATIONS

This application refers to Chinese Patent Application No. 2023103941237, filed on April 13, 2023, entitled "REGION DIVISION METHOD, APPARATUS AND COMPUTER-READABLE STORAGE MEDIUM", the entire contents of which are incorporated herein by reference.

This application also refers to Chinese Patent Application No. 2023104091653 filed on April 13, 2023, entitled "MOWING CONTROL METHOD, MOWING ROBOT AND COMPUTER STORAGE MEDIUM", the entire contents of which are incorporated herein by reference.

### TECHNICAL FIELD

Embodiments of the present disclosure relate to the field of region division, and more particularly, to a region division method and apparatus, and a computer storage medium.

### BACKGROUND

A mowing robot does not require a user to manually push a mower, and can complete a mowing task independently, saving manpower while improving mowing efficiency. As a kind of automatic walking equipment, a planning-based mowing robot has been widely used. When performing mowing, a conventional mowing robot usually moves back and forth within a preset region defined by a wire (an electrical wire buried near the edge of the lawn).

In existing technical solutions, the entire preset region is usually used as a region segmentation object, and the preset region is divided into mesh-like sub-regions of equal size. The positioning accuracy of the robot operating in the segmented region is low, which usually relies on the wire for posture correction. However, this division method tends to create sub-regions that do not contain the wire. When the robot moves into a sub-region that does not contain the wire to perform operations, the positioning accuracy of the robot is low due to the lack of posture correction.

### SUMMARY

In accordance with an embodiment of the present disclosure, a region division method and apparatus, and a computer storage medium are provided, which can improve positioning accuracy of a robot.

In accordance with a first aspect of an embodiment of the present disclosure, a region division method is provided, which includes: determining a preset region based on a pre-arranged wire; and dividing the preset region into a plurality of target sub-regions based on the wire, where each of the target sub-regions contains a respective section of the wire.

In a specific implementation, after dividing the preset region into a plurality of target sub-regions, the method further includes: performing a mowing operation in each target sub-region.

In a specific implementation, the dividing the preset region into a plurality of target sub-regions includes:
dividing the preset region into a plurality of initial sub-regions;
in response to any one of the plurality of initial sub-regions meeting a preset merging condition, merging the any one of the plurality of initial sub-regions with at least one adjacent initial sub-region to define a target sub-region; and
determining the plurality of initial sub-regions, excluding the any one of the plurality of initial sub-regions and the at least one adjacent initial sub-region, as target sub-regions.

In a specific implementation, the dividing the preset region into a plurality of initial sub-regions includes:
determining a first direction and a second direction, where the first direction is perpendicular to the second direction; and
dividing the preset region for multiple times along the first direction, and dividing the preset region for multiple times along the second direction to obtain the plurality of initial sub-regions.

In a specific implementation, after dividing the preset region into a plurality of target sub-regions and before performing a mowing operation in each target sub-region, the method further includes:
determining whether the target sub-regions meet a preset adjustment condition; and
adjusting the target sub-regions in response to the target sub-regions meeting the preset adjustment condition.

In a specific implementation, the dividing the preset region into a plurality of target sub-regions based on the wire includes:
determining a first direction and a second direction, where the first direction is perpendicular to the second direction; and
dividing the preset region once along the first direction, and dividing the preset region at least once along the second direction to obtain the plurality of target sub-regions.

In a specific implementation, the performing a mowing operation in each target sub-region includes:
performing a mowing operation in each target sub-region in a zig-zag path, where a mowing direction in each target sub-region is parallel to a long side corresponding to each target sub-region.

In a specific implementation, the method further includes:
in response to any one of the plurality of target sub-regions being not in a rectangle shape, constructing a minimum enclosing rectangle of the any one of the plurality of target sub-regions; and
determining a long side of the minimum enclosing rectangle of the any one of the plurality of target sub-regions to be a long side corresponding to the respective target sub-region.

In a specific implementation, the performing a mowing operation in each target sub-region includes:
according to distribution of the wire in each target sub-region, determining a first direction or a second direction as a mowing direction of each target sub-region; and
performing a mowing operation in each target sub-region according to the mowing direction.

It can be seen from the above technical solutions that the embodiments of the present disclosure have the following advantages. Each target sub-region divided contains a respective section of the wire, so when a mowing robot performs a mowing operation in each target sub-region, the robot can travel to the respective section of the wire in the target sub-region to perform posture correction, thereby improving the positioning accuracy during mowing in the target sub-region.

In a specific implementation, the method is applied to a robot, and the determining a preset region based on a pre-arranged wire includes: controlling the robot to move along the wire for at least one circle to determine the preset region. The dividing the preset region into a plurality of target sub-regions based on the wire includes: determining position points on the wire; determining division points specified by a user based on the respective position points on the wire; and dividing the preset region based on the division points to determine a plurality of sub-regions after division, where the sub-regions are the target sub-regions. After dividing the preset region into a plurality of target sub-regions, the method further includes: controlling the robot to work in each sub-region.

Preferably, the dividing the preset region based on the division points to determine a plurality of sub-regions after division includes:
connecting the division points based on a generation order of the division points to determine each sub-region within the preset region after connecting the division points.

Preferably, the determining division points specified by a user based on the respective position points on the wire includes:
receiving a drawing trajectory from the user to determine whether the drawing trajectory passes over the wire; and
in response to determining that the drawing trajectory does not pass over the wire, extending the drawing trajectory automatically until the drawing trajectory intersects with the wire, and determining an intersection point between the drawing trajectory and the wire as the respective division point.

Preferably, the drawing trajectory includes a straight line, a polyline, a curve, or any combination thereof;
the extending the drawing trajectory automatically until the drawing trajectory intersects with the wire includes:
in response to the drawing trajectory being the straight line, extending both ends of the straight line directly until they intersect with the wire;
in response to the drawing trajectory being the curve, determining whether a maximum curvature of the curve is greater than a preset curvature threshold;
in response to determining the maximum curvature being greater than the preset curvature threshold, obtaining two endpoints of the curve, generating a straight line passing the two endpoints, and further extending the straight line to intersect with the wire; and
in response to determining the maximum curvature being less than or equal to the preset curvature threshold, generating a straight line tangent to a position of the maximum curvature, and further extending the straight line to intersect with the wire.

Preferably, the dividing the preset region based on the division points includes:
receiving movement of the division points by the user, and prompting the user to confirm movement positions after the movement; and
dividing the preset region based on the confirmed movement positions.

Preferably, the method further includes:
receiving selection of the division points by the user, displaying the selected division points in a preset manner, and providing a deletion option; and
in response to receiving a selection of the deletion option from the user, deleting the drawing trajectory where the division points are located.

Preferably, there is at least a section of the wire with a preset length on the boundary of each sub-region

Preferably, after dividing the preset region based on the division points to determine a plurality of sub-regions after division, the method further includes:
setting corresponding work attributes for the sub-regions.

Preferably, after dividing the preset region based on the division points to determine a plurality of sub-regions after division, the method further includes:
determining whether the work attributes of two adjacent sub-regions are the same and whether an area of one of the two adjacent sub-regions is smaller than a preset threshold; and
in response to the work attributes of the two adjacent sub-regions being the same and the area of one of the two adjacent sub-regions being smaller than the preset threshold, merging the two adjacent sub-regions into a same region.

Preferably, the method further includes:
in response to a subdivision being required in a sub-region among the sub-regions, firstly receiving selection of the sub-region to be subdivided from the user, and then determining division points specified by the user based on the respective position points on the wire in the sub-region to be subdivided.

In accordance with the present disclosure, a region division method and apparatus, and a computer-readable storage medium are provided, which relate to the field of robot control. In this solution, after the robot is controlled to move along the wire for at least one circle, position points on the wire are determined; the division points specified by the user based on the position points on the wire are determined; a division of the preset region is performed based on the division points, to determine the sub-regions after division; and the robot is controlled to work in each sub-region. It can be seen that, by setting the wire, the present disclosure enables the robot to move only along the wire, without having to move within the entire preset region, thereby reducing the workload of the robot and improving the efficiency of region division. Moreover, there is no need to use a radar or other positioning apparatus on the robot, avoiding external interference, and improving the accuracy of the region division results. In addition, the present disclosure can also realize division of various types of sub-regions according to user needs, meeting various needs of users.

In accordance with a second aspect of an embodiment of the present disclosure, a robot is provided, which includes:
a first processing unit configured to determine a preset region based on a pre-arranged wire; and
a second processing unit configured to divide the preset region into a plurality of target sub-regions based on the wire, where each of the target sub-regions contains a respective section of the wire.

In order to solve the above technical problems, in accordance with a third aspect of the present disclosure, a region division apparatus is further provided, which includes:
a memory configured to store computer programs; and
a processor configured to implement the region division method in the first aspect when executing the computer programs.

In accordance with a fourth aspect of an embodiment of the present disclosure, a computer program product having instructions stored therein is provided, which, when executed on a computer, causes the computer to perform the method in the first aspect.

In accordance with a fifth aspect of an embodiment of the present disclosure, a computer-readable storage medium having instructions stored therein is provided, where the instructions, when executed on a computer, cause the computer to perform the method in the first aspect.

It can be seen from the above technical solutions that the embodiments of the present disclosure have the following advantages. Each target sub-region divided contains a respective section of the wire, so when a mowing robot performs an operation in each target sub-region, the robot can travel to the respective section of the wire in the target sub-region to perform posture correction, thereby improving the positioning accuracy of the robot in the target sub-region.

### BRIEF DESCRIPTION OF DRAWINGS

FIG. 1 is a structural diagram of a mowing robot according to an embodiment of the present disclosure;
FIG. 2 is a schematic flowchart of a region division method according to an embodiment of the present disclosure;
FIG. 3a is a schematic flowchart of a method for determining a preset region according to an embodiment of the present disclosure;
FIG. 3b is another schematic flowchart of a method for determining a preset region according to an embodiment of the present disclosure;
FIG. 4a is a schematic flowchart of a region division method according to an embodiment of the present disclosure;
FIG. 4b is another schematic flowchart of a region division method according to an embodiment of the present disclosure;
FIG. 4c is another schematic flowchart of a region division method according to an embodiment of the present disclosure;
FIG. 4d is another schematic flowchart of a region division method according to an embodiment of the present disclosure;
FIG. 5a is a schematic flowchart of a region division method according to an embodiment of the present disclosure;
FIG. 5b is another schematic flowchart of a region division method according to an embodiment of the present disclosure;
FIG. 5c is another schematic flowchart of a region division method according to an embodiment of the present disclosure;
FIG. 6a is a schematic flowchart of a preset region adjustment method according to an embodiment of the present disclosure;
FIG. 6b is another schematic flowchart of a preset region adjustment method according to an embodiment of the present disclosure;
FIG. 6c is another schematic flowchart of a preset region adjustment method according to an embodiment of the present disclosure;
FIG. 7 is a schematic flowchart of a region division method provided by the present disclosure;
FIG. 8 is a schematic structural diagram of a robot according to an embodiment of the present disclosure;
FIG. 9 is another schematic structural diagram of a mowing robot according to an embodiment of the present disclosure;
FIG. 10 is a structural block diagram of a region division apparatus provided by the present disclosure; and
FIG. 11 is a structural block diagram of a computer-readable storage medium provided by the present disclosure.

### DETAILED DESCRIPTION

The technical solutions in the embodiments of the present disclosure will be clearly and completely described below in conjunction with the drawings in the embodiments of the present disclosure. Obviously, the described embodiments are only part of the embodiments of the present disclosure, rather than all of the embodiments. Based on the embodiments in the present disclosure, all other embodiments obtained by those of ordinary skill in the art without any creative work shall fall within the scope of protection of the present disclosure.

Embodiments of the present disclosure provide a region division method and apparatus, and a computer storage medium, which can improve positioning accuracy of machine operations.

In order to better implement the region division method, an embodiment of the present disclosure provides a mowing robot system, which includes a wire, a charging station and a mowing robot. The wire is buried on a boundary line of a preset region, a signal generator is provided on the charging station or on the wire, one or both ends of the wire are connected to the signal generator, and the signal generator inputs positioning signals and boundary signals into the wire so that the positioning signals and boundary signals are transmitted on the wire. The mowing robot includes a sensing module, a cutting module, a driving module and a control module. The sensing module includes a position sensing component, a boundary sensing component, a collision sensing component and a lifting sensing component. The cutting module includes elements for mowing. The driving module includes a driving wheel and a driving motor. The control module communicates with the cutting module, the driving module and the sensing module respectively. The control module can respond to positioning information, collision information and lifting information of the mowing robot obtained from the sensing module, and operate the cutting module and the driving module according to the information obtained from the sensing module.

It should be noted that the components in the sensing module can be configured to perform the following functions. The position sensing component is configured to detect positioning signals transmitted on the wire and to position the mowing robot located over the wire. The boundary sensing component is configured to detect the boundary signals transmitted on the wire and guide the mowing robot to move along the wire. The collision sensing component is configured to detect whether a robot is collided with, and can detect the direction of the collision, thereby accurately controlling the robot to move in the opposite direction. The lifting sensing component is configured to detect whether the robot is lifted off the ground. If the robot is lifted off the ground, the cutting module and the driving module are controlled to stop working. The cutter head in-place sensing component is configured to detect whether an element for mowing in the cutting module is in contact with the lawn. If the element for mowing is in contact with the lawn, the cutting module and the driving module are controlled to start working.

In some specific implementations, the position sensing component and the boundary sensing component in the sensing module are usually deployed on the mowing robot.

The position sensing component includes a first positioning sensor and a second positioning sensor, where the first positioning sensor is a first sensing coil having a first sensitive axis and is configured to detect the positioning signals existing in the direction of the first sensitive axis; the second positioning sensor is a second sensing coil having a second sensitive axis and is configured to detect the positioning signals in the direction of the second sensitive axis. The first sensitive axis is perpendicular or parallel to the second sensitive axis.

The mowing robot does not require a user to manually push a mower, and can complete a mowing task independently, saving manpower while improving mowing efficiency. As a kind of automatic walking equipment, a planning-based mowing robot has been widely used. When performing mowing, a conventional mowing robot usually moves back and forth within a preset region defined by a wire (an electrical wire buried near the edge of the lawn).

In existing technical solutions, the entire preset region is usually used as a region segmentation object, and the preset region is divided into mesh-like sub-regions of equal size. The positioning accuracy of the robot operating in the segmented region is low, which usually relies on the wire for posture correction. However, this division method tends to create sub-regions that do not contain the wire. When the robot moves into a sub-region that does not contain the wire to perform operations, the positioning accuracy of the robot is low due to the lack of posture correction.

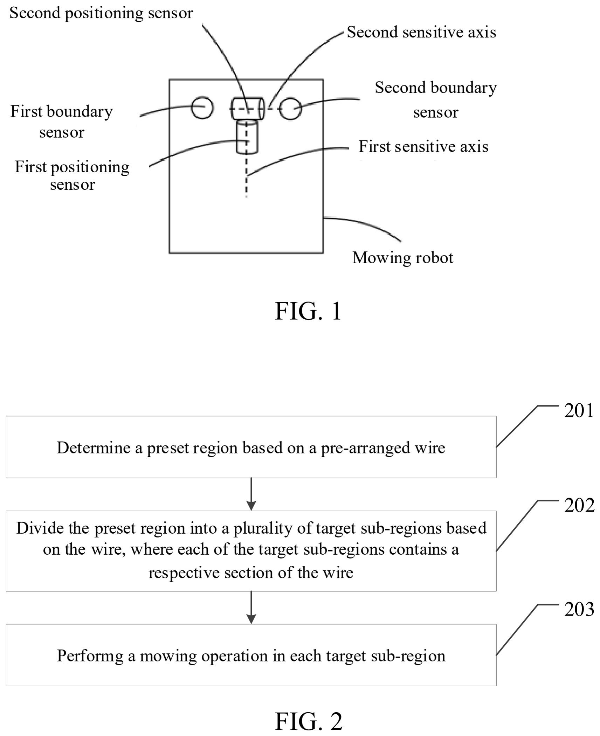

Please refer to FIG. 1 below. A first embodiment of the present disclosure provides a specific arrangement for the position sensing component and the boundary sensing component. In order to improve the positioning accuracy of the sensors, the second sensitive axis and the first sensitive axis can be deployed so that the first sensitive axis and the second sensitive axis remain vertical, that is, the first positioning sensor and the second positioning sensor are distributed on the central axis of the mowing robot.

When the mowing robot is mowing and the forward direction thereof is perpendicular to the wire, the mowing robot uses the first positioning sensor for positioning. When the mowing robot is traveling along a line and the forward direction thereof is parallel to the wire, the mowing robot uses the second positioning sensor for positioning. When the mowing robot is mowing and the forward direction thereof is neither parallel nor perpendicular to the wire, the mowing robot uses the first sensor and the second positioning sensor for positioning.

It should be appreciated that in order to ensure positioning accuracy, the mowing robot has at least one boundary sensor and at least one positioning sensor. In this embodiment, the mowing robot is provided with two boundary sensors and two positioning sensors for illustration. Specifically, the two boundary sensors are symmetrically distributed on opposite sides of the central axis of the mowing robot, and the two positioning sensors are distributed front and rear on the central axis of the mowing robot. When the signal generator is arranged on the charging station, the charging station is connected to the wire, and the signal generator on the charging station can intermittently emit a high-frequency positioning signal and a low-frequency boundary signal. When the wire is located in the middle of the first boundary sensor and the second boundary sensor (that is, the mowing robot travels over the wire), the first boundary sensor and the second boundary sensor can sense magnetic field signals of opposite direction and similar strength. When the wire is located outside the mowing robot (i.e., the wire is located on a side of the first boundary sensor away from the second boundary sensor, or the wire is located on a side of the second boundary sensor away from the first boundary sensor), the first boundary sensor and the second boundary sensor can sense the magnetic fields of the same direction, and the boundary sensor closer to the wire senses a stronger magnetic field. The above signal characteristics are used to control the robot to move along the boundary line. Specifically, the mowing robot can use the positioning sensors to determine a first time point and a second time point at which positioning signals with different directions reach an end point through transmission along the wire, and then determine a distance between a current position of the robot and a signal processor through a signal transmission speed on the wire and a length of the entire wire.

The first embodiment of the present disclosure provides a region division method, which includes: determining a preset region based on a pre-arranged wire; and dividing the preset region into a plurality of target sub-regions based on the wire, where each target sub-region contains a respective section of the wire.

Specifically, when each target sub-region contains a respective section of the wire, the machine operating in each sub-region can be positioned according to the wire, adjust its postures, improve the positioning accuracy, and the like. The operating efficiency of the machine can be improved.

In some examples, the preset region may be a region to be mowed. Referring to FIG. 2, an embodiment of the present disclosure provides a mowing control method, which includes the following steps.

In a step of 201, a preset region is determined based on a pre-arranged wire.

Before the wire-buried mowing robot performs the mowing operation, it is necessary to pre-bury the wire around the lawn. The pre-buried wire is configured to limit the preset region of the mowing robot. Generally, the preset region is a closed space enclosed by the wire. In practical applications, the wire may be a physical wire or a virtual boundary signal (such as an electromagnetic signal or an optical signal) emitted by a signal transmitting apparatus. The mowing robot is positioned according to the wire and obtains the preset region (the region to be mowed) by walking along the wire for a circle.

In addition, in order to ensure that the mowing robot can continuously perform the mowing operation, a charging station is usually installed on or near the wire. The charging station can be configured to dock the mowing robot and replenish energy thereof when the mowing robot is running out of battery. In order to facilitate the mowing robot to travel along the wire to enter the charging station for charging, the charging station can be set on the wire.

In some specific implementations, the mowing robot walks along the wire for one circle as follows. Starting from any point on the wire, the mowing robot walks along the wire in a clockwise or counterclockwise direction. When the current posture of the mowing robot is consistent with a starting posture, it means that the mowing robot has completed the edge-following operation (that is, the mowing robot walks along the wire for one circle). Meanwhile, during the edge-following process, the mowing robot uses the first positioning sensor to position itself, and the mowing robot continuously obtains environmental information about surroundings thereof through other sensors, so as to accurately determine the preset region (and obstacle information within the preset region) after completing edge walking. Generally, the mowing robot starts from the charging station, walks along the wire in the clockwise or counterclockwise direction, and uses the first boundary sensor and the second boundary sensor to detect boundary signals, thereby completing the edge-following operation.

In practical applications, there may be multiple wires, for example, a first wire arranged around a lawn boundary, and a second wire arranged around a charging station. When there are multiple wires, there are also multiple edge-following methods.

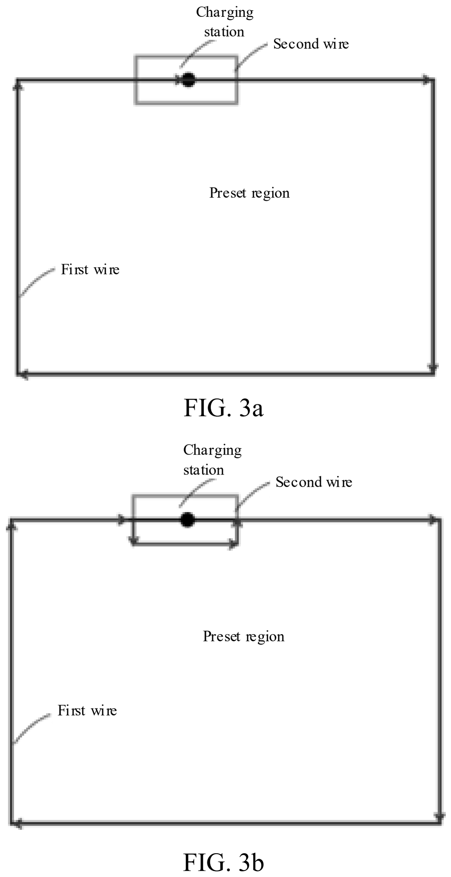

The following examples illustrate two different edge-following methods using a rectangular lawn, as shown in FIG. 3a and FIG. 3b. In both figures, there presents a first wire (i.e. the line forming the large rectangle in FIG. 3a and FIG. 3b) and a second wire (i.e. the line forming the small rectangle in FIG. 3a and FIG. 3b).

Method 1: the mowing robot may only walk along the wire corresponding to the lawn (i.e. the first wire) for one circle (as shown in FIG. 3a). Method 2: the mowing robot may also walk along a "concave" wire (i.e., the line formed by connecting a plurality of straight lines with arrows in FIG. 3b) formed by two wires (i.e., the first wire and the second wire) for one circle (as shown in FIG. 3b).

It should be noted that FIG. 3a and FIG. 3b both indicate schematic diagrams of walking along the wires in a clockwise direction. In fact, the above two edge-following methods can also be implemented by walking along the wire in a counterclockwise direction, which is not limited in this embodiment.

According to the above-mentioned related embodiments, in order to realize the automatic edge-following operation of the mowing robot, the operation can be realized by the following method. The signal generator deployed at the charging station emits boundary signals intermittently, and the mowing robot continuously receives boundary signals through two boundary sensors (the first boundary sensor and the second boundary sensor) deployed on the robot body, and determines in real time its position relative to the wire by comparing the boundary signals obtained by the two boundary sensors, that is, whether the wire is located exactly between the first boundary sensor and the second boundary sensor, thereby achieving accurate edge-following operation.

In a step of 202, the preset region is divided into a plurality of target sub-regions based on the wire, where each target sub-region contains a respective section of the wire.

After the preset region is determined in step 201, it is necessary to divide the preset region into a plurality of target sub-regions according to a preset map segmentation method. It should be noted that, under the premise of ensuring that each target sub-region obtained by division according to the preset map segmentation method contains a respective section of the wire, this step does not impose any limitation on the preset map segmentation method.

In some specific implementations, this step can be implemented in the following ways: determining a first direction and a second direction, where the first direction is perpendicular to the second direction; dividing the preset region once along the first direction, and dividing the preset region at least once along the second direction to obtain the plurality of target sub-regions.

Specifically, a first direction and a second direction perpendicular to each other are determined according to requirements (and the preset region), and then the preset region is divided once along the first direction and divided any number of times along the second direction to obtain the plurality of target sub-regions. It should be appreciated that no matter the preset region is a regular shape or an irregular shape, no matter the total length of the wire is long or short, each target sub-region obtained by dividing in the above manner includes at least one section of wire.

The following example illustrates a preset rectangular region. The rectangle has sides in two directions, and the two directions are perpendicular to each other. Using the condition that two sides of a rectangle are perpendicular, two sides (side a and side b) that are perpendicular to each other are first determined in the rectangle. Then, a direction parallel to side a is determined as a first direction, and a direction parallel to side b is determined as a second direction. Finally, the preset region is divided once along the first direction, and the preset region is divided any number of times along the second direction to obtain the plurality of target sub-regions.

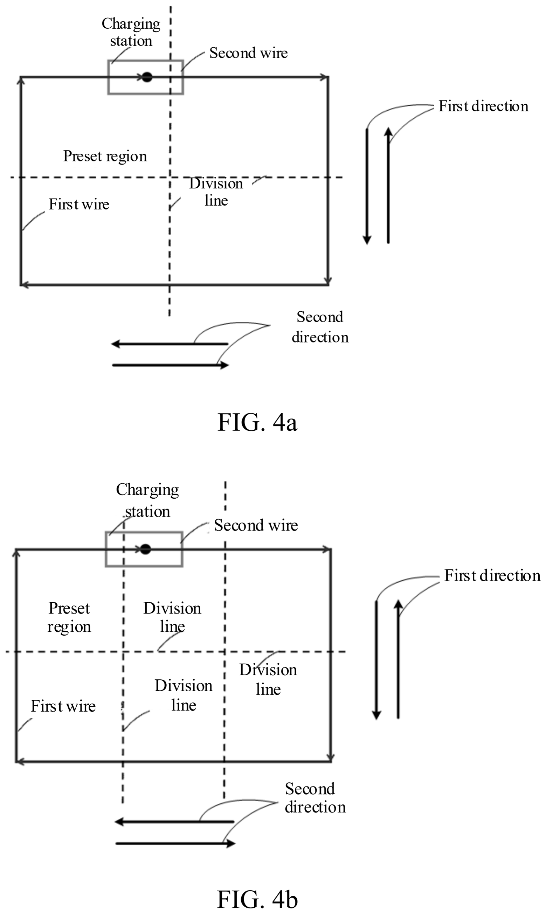

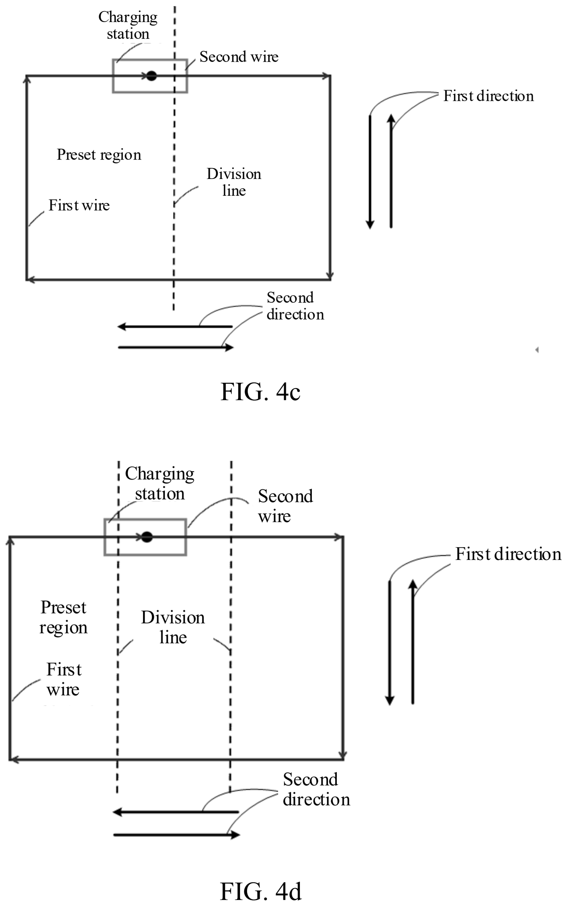

Specifically, based on the edge-following method shown in FIG. 3a and FIG. 3b, four different map segmentation methods are provided in FIG. 4a, FIG. 4b, FIG. 4c and FIG. 4d. Each closed rectangle formed by the first wire and the division lines (dashed lines shown in the figures) in FIG. 4a, FIG. 4b, FIG. 4c and FIG. 4d is a target sub-region obtained by division, and the first wire and the second wire may be determined with reference to FIG. 3a and FIG. 3b and related embodiments.

Method 1: one division is performed along one direction (the first direction or the second direction), and at least one division is performed along another direction (the second direction or the first direction) (e.g., in FIG. 4a, one division is performed along the second direction and one division is performed along the first direction; in FIG. 4b, one division is performed along the second direction, and two divisions are performed along the third direction). Method 2: at least one division is performed along only one direction (the first direction or the second direction) (e.g., in FIG. 4c, one division is performed along the first direction; in FIG. 4d, two divisions are performed along the first direction). It should be noted that the first direction and the second direction marked in FIG. 4a, FIG. 4b, FIG. 4c and FIG. 4d are merely examples and not limitations to the implementations of the present disclosure. The first direction and the second direction in the embodiments of the present disclosure may be any directions perpendicular to each other.

The dashed lines in FIG. 4a, FIG. 4b, FIG. 4c and FIG. 4d are division lines along the first direction or the second direction. Although, after being divided according to (one or more) division lines in each direction in FIG. 4a, FIG. 4b, FIG. 4c, and FIG. 4d, the wire perpendicular to the respective direction in the preset region is equally divided into multiple sections. It should be appreciated that the multiple division lines in each direction can also divide the wire in that direction into multiple unequal sections, which is not specifically limited here.

It should be noted that FIG. 4a, FIG. 4b, FIG. 4c and FIG. 4d are obtained by division line processing based on FIG. 3a, and this does not pose any limitation on the map segmentation method in FIG. 4a, FIG. 4b, FIG. 4c and FIG. 4d and related embodiments, and can only be used in the preset region determined by performing counterclockwise edge-following along the first connecting wire. It should be appreciated that the content shown in the accompanying drawings only represents an implementation in a specific scenario, and is not a limitation of the embodiments of the present disclosure. The map segmentation method provided in the embodiments of the present disclosure can divide the preset region determined by any method.

In some specific implementations, this step may also be implemented in the following ways: determining a first direction and a second direction, where the first direction is perpendicular to the second direction; and dividing the preset region for multiple times along the first direction, and dividing the preset region for multiple times along the second direction to obtain a plurality of initial sub-regions.

After the first map segmentation is performed according to the above method (i.e. the preset region is divided into a plurality of initial sub-regions), there may be an initial sub-region that does not include any section of the wire. In this case, the initial sub-region can be merged with at least one adjacent initial sub-region containing a section of the wire to obtain a target sub-region, and then, other initial sub-regions other than the merged initial sub-region and the corresponding adjacent initial sub-region are also determined as target sub-regions. This embodiment provides a map segmentation method for obtaining target sub-regions by secondary division, which improves the feasibility of the solution.

It should be noted that the term "adjacent sub-region" (including but not limited to adjacent initial sub-region and adjacent target sub-region) or the definition of "adjacent" mentioned in the above and later embodiments of the present disclosure indicates that the boundary lines of the two sub-regions overlap. The boundary line of a sub-region refers to each line segment (or straight line) that encloses the sub-region into a closed region.

In the embodiments of the present disclosure, a mowing control method that is more adaptable to multiple scenarios is provided. First, a preliminary segmentation is performed. If the result of the preliminary segmentation achieves the technical effect that each initial sub-region contains a respective section of the wire, there is no need for secondary processing, and each initial sub-region is directly determined as a target sub-region to save computing resources and improve mowing efficiency. If the result of the initial segmentation does not achieve the technical effect that each initial sub-region contains a respective section of the wire, a secondary process is performed to ensure that each target sub-region contains a respective section of the wire.

In a step of 203, a mowing operation is performed in each target sub-region. That is, after dividing the preset region into a plurality of target sub-regions, the method further includes performing mowing in each target sub-region.

The mowing robot is controlled to perform mowing operations in each target sub-region obtained by division in step 202 according to a preset mowing method. The preset mowing method includes but is not limited to zig-zag planning or loop-shaped planning, which is not limited here.

If the preset mowing method is zig-zag planning, in order to further improve the accuracy of the mowing operation of the mowing robot in each target sub-region, the mowing direction of the mowing robot in each target sub-region can be made parallel to the long side (including a section of the wire) corresponding to the target sub-region. It should be noted that, through the restriction on the mowing direction, the mowing robot can directly or indirectly contact the wire every time it turns (or adjusts the posture thereof), thereby ensuring the accuracy of the posture after turning, and ultimately facilitating to improve the accuracy of the overall mowing operation.

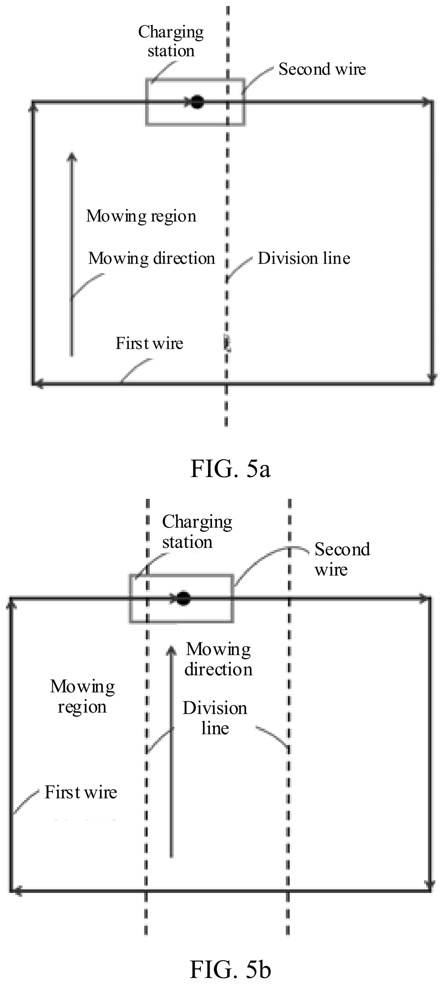

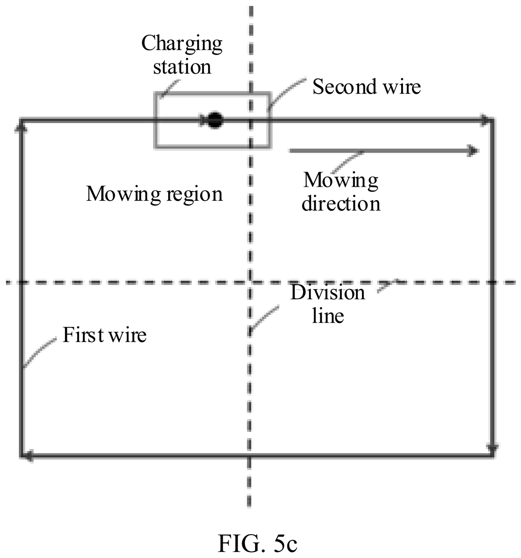

The following example illustrates a preset region which is a rectangular region to be mowed and a rectangular target sub-region. In practice, existing mowing operations include but are not limited to the three mowing operations shown in FIG. 5a, FIG. 5b, and FIG. 5c. The mowing direction in each target sub-region in FIG. 5a, FIG. 5b, and FIG. 5c can be determined by referring to the mowing direction indication arrow shown in the figures, and each target sub-region in FIG. 5a, FIG. 5b, and FIG. 5c can be determined by referring to FIG. 4a, FIG. 4b, FIG. 4c and FIG. 4d and related embodiments.

Method 1: If the wire contained in the target sub-region can form a semi-enclosed region (as shown in the left or right target sub-regions in FIG. 5a and FIG. 5b), mowing is performed in a direction parallel to the opening direction. The opening direction is the direction of the line connecting the two end points of the wire contained in the target sub-region, and the mowing direction may be any direction parallel to the line connecting the two end points.

Method 2: If there are only upper and lower wires parallel to each other in the target sub-region (such as the rectangle formed by two division lines and the first wire in the middle of FIG. 5b), mowing is performed in a direction perpendicular to the upper wire (or the lower wire).

Method 3: If there are adjacent wires in the target sub-region (as shown in each target sub-region in FIG. 5c), the mowing operation is performed in a direction parallel to the long side (or short side).

In practical applications, the target sub-region obtained by division may be an irregular shape. In order to improve the feasibility of the embodiments of the present disclosure, for irregular target sub-regions, the long side corresponding to the region to be mowed can be determined by constructing a minimum enclosing rectangle to determine the mowing direction. Specifically, it can be achieved in the following ways: If any target sub-region is not a rectangle, then the minimum enclosing rectangle of any target sub-region is constructed, and the long side of the minimum enclosing rectangle of any target sub-region is determined as the long side corresponding to the target sub-region.

In addition, it should be appreciated that the above embodiments of the present disclosure have provided a method for determining the corresponding short side or long side by constructing a minimum enclosing rectangle. By analogy, in actual applications, if the region to be mowed and/or the target sub-region is not a rectangle, the minimum enclosing rectangle of the region can be constructed first, and then, based on the constructed minimum enclosing rectangle, processing can be performed with reference to the above and later related embodiments of the present disclosure.

In the embodiment of the present disclosure, each divided target sub-region contains a respective section of the wire, so that when the mowing robot performs a mowing operation on each target sub-region, the robot can travel to the respective section of the wire in the target sub-region to perform posture correction, thereby improving the positioning accuracy during mowing in the target sub-region.

The above-mentioned embodiments provide a method for determining a region to be mowed, a map segmentation method, and a method for mowing in each target sub-region. In an ideal case, after the region to be mowed is determined, the map segmentation method provided in the above embodiments of the present disclosure can be directly used to obtain the plurality of target sub-regions containing respective sections of the wire.

Further, the map segmentation method related to the above embodiments of the present disclosure only ensures that each target sub-region contains a respective section of the wire. In order to improve the mowing efficiency of the mowing robot, the target sub-region can be further adjusted after the division, and the mowing operation can be performed in the adjusted target sub-region. In practical applications, on one hand, the target sub-region with the total length of the wire contained therein exceeding a preset expansion threshold is expanded, and on the other hand, the target sub-region with the total length of the wire contained therein falling below the preset subdivision threshold is reduced. Therefore, when an obstacle in the region to be mowed exists in at least two adjacent target sub-regions at the same time, the adjacent target sub-regions containing the obstacle are merged. Each target sub-region among the multiple adjacent target sub-regions where the obstacle exists is adjacent to any other sub-region.

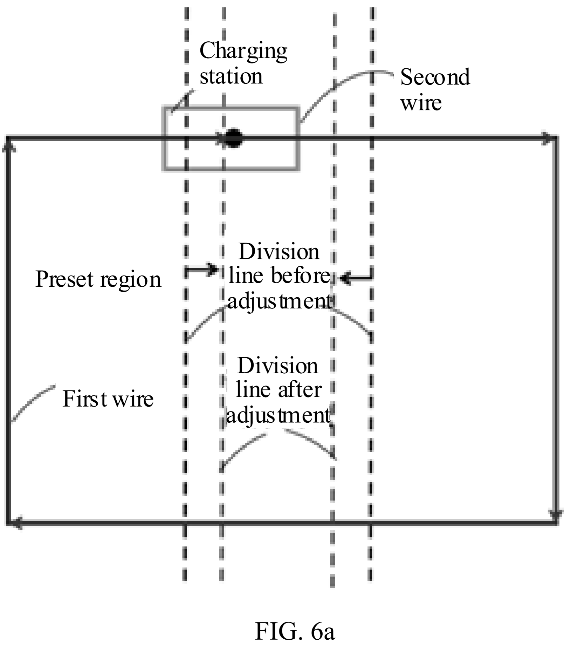

The following examples illustrate the adjustment scheme. Case 1: please refer to FIG. 6a, if the target sub-region contains too many boundary lines (i.e. the total length of the wires exceeds the preset expansion threshold, that is, the target sub-region is a sub-region to be expanded), the target sub-region is expanded. The observation method of the target sub-region refers to the above drawings and related embodiments.

In order to better illustrate the following adjustment scheme, each time the division lines of FIG. 6a are observed, only the division lines before adjustment or the division lines after adjustment is observed (in both observation cases, three target sub-regions can be observed). ① When only the division lines before adjustment are observed, the three target sub-regions in FIG. 6a are referred to as the first target sub-region (before adjustment), the second target sub-region (before adjustment), and the third target sub-region (before adjustment) from left to right; ② When only the adjusted division lines are observed, the three target sub-regions in FIG. 6a are referred to as the (adjusted) first target sub-region, the (adjusted) second target sub-region, and the (adjusted) third target sub-region from left to right.

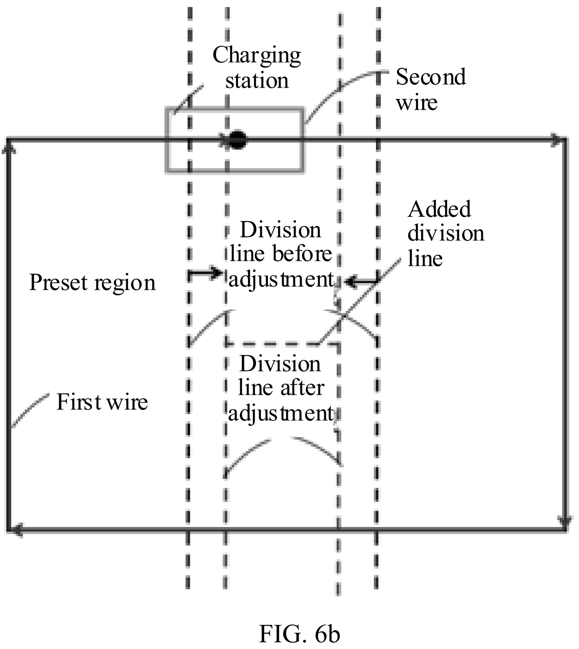

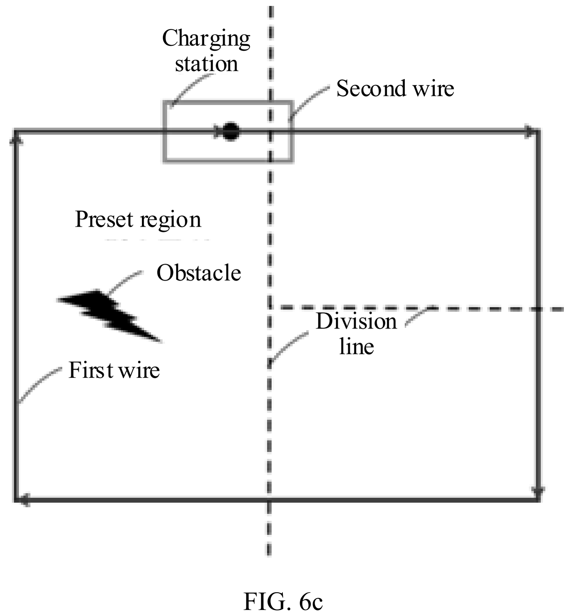

If the division lines in FIG. 6 a are the division lines before adjustment, and the first target sub-region and the third target sub-region are sub-regions to be expanded. Then it is necessary to expand the first target sub-region (before adjustment) and the third target sub-region (before adjustment). Specifically, the region adjustment can be achieved by reducing at least one adjacent target sub-region corresponding to the sub-region to be expanded and transferring the reduced region to the corresponding sub-regions to be expanded. Specifically, FIG. 6a provides a method for moving at least one related division line along a vertical direction thereof.

Case 2: further, please continue to refer to FIG. 6b. Based on the relevant embodiment of FIG. 6a above, if the (adjusted) second target sub-region satisfies the preset inclusion of fewer boundary lines (that is, the total length of the included wire is lower than the preset subdivision threshold, that is, the target sub-region is a sub-region to be subdivided), then the target sub-region is segmented again. That is, according to the requirements and the above map segmentation method for dividing the target sub-region, the (adjusted) second target sub-region may be divided again, and each of the regions after division may be used as the target sub-regions.

Case 3: If the target sub-regions before adjustment are as shown in FIG. 4a, then if there is an obstacle, the obstacle is distributed across the two left target sub-regions in FIG. 4a (the obstacle here may refer to FIG. 6c). In order to improve the efficiency of mowing operations, the two left target sub-regions in FIG. 4a need to be merged into one target sub-region. For the merged target sub-region and the specific distribution of the obstacle, see FIG. 6c.

It should be noted that no matter what kind of adjustment is made to each target sub-region, it is necessary to ensure that each target sub-region after adjustment contains a respective section of the wire, where the adjustment includes but is not limited to expansion, subdivision and/or segmentation.

The above embodiments provide a variety of implementations for adjusting the target sub-region before the mowing operation, which can further improve the efficiency of the mowing operation and positioning accuracy.

In the existing technology, when a robot walks within a preset region, due to different road conditions or environments in different regions within the preset region, the robot needs to work in different working modes in different regions. For example, when the robot is a mowing robot working outdoors, and the grass species in different regions within the preset region are different, the robot needs to perform mowing tasks in different regions according to different working modes.

However, in the existing technology, when dividing a preset region, a radar or other positioning apparatus needs to be installed on the robot. When the robot walks within the preset region, the robot's posture information is obtained through the radar or other positioning apparatus, and the preset region is divided according to the posture information of the robot. When this method is used to divide the preset region, the robot needs to move within the preset region, which results in a large workload for the robot. In addition, the radar or other positioning apparatus is required, which is easily affected by external interference, resulting in inaccurate region division results.

Therefore, a second embodiment of the present disclosure provides a region division method, which is different from the above first embodiment mainly in that it provides a method for setting a wire, so that the robot only needs to move along the wire, and does not need to move within the entire preset region, thereby reducing the workload of the robot and improving the efficiency of region division. Moreover, there is no need to use radar or other positioning apparatus on the robot, avoiding external interference and improving the accuracy of the region division results. In addition, this embodiment can also realize the division of various types of sub-regions according to user needs, meeting various needs of users.

In order to make the objective, technical solution and advantages of this embodiment clearer, the technical solution of this embodiment will be clearly and completely described below in conjunction with the drawings in this embodiment. Obviously, the described embodiment is only a part of the embodiments, not all of the embodiments. Based on this embodiment, all other embodiments obtained by those of ordinary skill in the art without any creative work shall fall within the scope of protection of this embodiment.

Specifically, the robot in this embodiment may be applied in the mowing scenario. The following embodiment is described using a mowing robot as an example, but not limited thereto. For example, the robot may also be a mobile robot such as a sweeping robot or a sprinkler robot, which is not limited in this embodiment.

Before describing the region division method for the robot provided in this embodiment, the structure and principle of the mowing robot involved in this embodiment are first described as follows.

Structurally, the mowing robot includes at least a mowing module, a sensing module and a walking module. The mowing module at least includes elements for mowing, such as a cutter head, and the like. The sensing module at least includes a position sensing component for positioning the mowing robot located over the wire, a boundary sensing component for detecting magnetic field signals in a preset region so that a processor can determine boundary information based on magnetic field signal analysis, a collision sensing component for detecting whether the robot is collided with, a lifting sensing component for detecting whether the robot itself is lifted off the ground, a cutter head lifting sensing component for determining whether the cutter head is lifted off the ground, and a cutter head in-place sensing component for detecting whether the cutter head has moved to a preset position. The walking module at least includes a drive motor, wheels (driving wheels and driven wheels), and the like.

In principle, the processor in the mowing robot analyzes the sensor information collected by each sensing module to generate a control signal corresponding to the sensor information and turn on or off the driving module in the mowing robot. When the driving module is turned on, the driving module drives the mowing module and/or the walking module to enable the mowing robot to perform mowing operations.

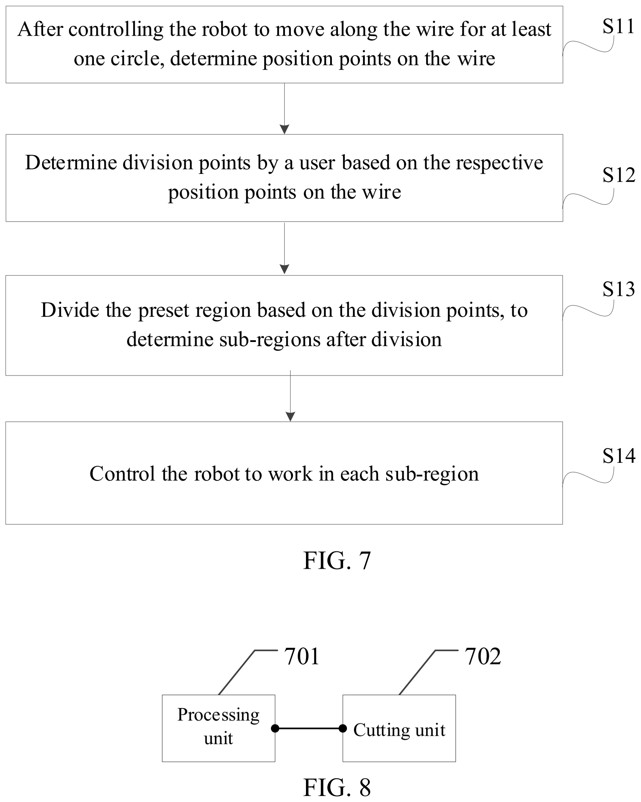

Please refer to FIG. 7, which is a flow chart of a region division method provided in this embodiment. A wire is set within the preset region where the robot walks. Specifically, in the existing technology, the radar or other positioning apparatus is used to obtain posture information of the robot, and then the preset region is divided according to the posture information, resulting large robot workload and low accuracy of the division result. In order to solve the above technical problem, in this embodiment, the wire is set within the preset walking region of the robot. During the walking process, the robot senses the boundary signal and/or positioning signal on the wire to realize the positioning of the robot, and then the preset region is divided according to the positioning information of the robot. In a specific embodiment, the wire may be set at the boundary of the preset region to serve as a boundary wire of the preset region, or the wire may be set at a certain distance from the boundary of the preset region. The wire may be buried under the ground, and when the robot walks over the wire, it can sense the boundary signal on the wire, thereby realizing the positioning of the robot and preventing the robot from walking outside the preset region.

It can be seen that, by setting the wire within the preset region, the working range of the robot can be limited. When the robot walks along the wire, the robot can be accurately positioned, so that when the preset region is divided, accurate region division results can be obtained, which is convenient for the robot to work.

Based on setting the wire within the above-mentioned preset region, the region division method of this embodiment can be applied to a terminal device, which may be a mobile phone, a tablet, a computer or other movable terminal device, and there is at least an APP on the terminal device that can be operated by the user. The terminal device establishes a wireless communication connection with the robot (via the wireless communication device such as WIFI module/4G communication module/5G communication module/Bluetooth, and the like installed in the robot). The method includes the following steps.

In a step of S11, after controlling the robot to move along the wire for at least one circle, position points on the wire are determined; where the robot is controlled to move along the wire for at least one circle, so as to obtain the preset region, that is, the preset region is determined based on the pre-arranged wire. Determining the position points on the wire is actually a first sub-step of dividing the preset region into a plurality of target sub-regions based on the wire.

First, when the wire is set in the preset region, the robot is controlled to move along the wire, such as controlling the robot to move along the wire for at least one circle, and during the walking process, multiple position points of the robot on the wire are determined. These multiple position points correspond to multiple position information of the robot on the wire, such as the position information indicating the distance between the robot and the charging station.

Specifically, if a signal processor for transmitting a test signal is connected to both ends of the wire, a method for determining multiple position points on the wire may include the following steps. Starting from the signal processor, the robot is controlled to move for at least one circle along the direction from the starting point to the end point of the signal processor, that is, the robot moves from the starting point of the wire (the starting point of the signal processor) to the end point of the wire (the end point of the signal processor) in the positive direction, and moves from the end point of the wire to the starting point of the wire in the reverse direction. When the robot is moving, the robot obtains multiple position points of the robot through its own sensing module, and draws a map of the region surrounded by the wire with the multiple position points. The robot does not need to move in and identify the region within the wire. Finally, the robot can send the successfully drawn region map to the terminal device through the communication module. The APP on the terminal device can at least display the wire region map including the wire outline.

It can be seen that, this step only identifies each position point on the wire, and other position points within the region enclosed by the wire do not need to be identified, which not only reduces the workload of the robot, but also does not require too many sensors and positioning apparatus to assist in obtaining the position of the mowing robot.

As a preferred embodiment, the current position point of the robot on the wire may be determined as follows. The control signal processor outputs test signals to the wire on both sides, obtains the time difference or phase difference of the test signals on different sides transmitted along the wire to reach the end point, and determining the current position of the robot based on the time difference or phase difference. The end point may be the current position of the robot, and the signal processor is a device independent of the robot and may be set at any position, such as on the charging station. The current position information of the robot on the wire is determined by obtaining the time difference or phase difference of the test signals sent by the signal processor through the wire on both sides, and then the current position point is determined. The implementation is simple, not easily affected by the external environment, and the positioning accuracy is high.

The number of position points may be related to the step length of the robot during walking and the signal frequency of the test signal emitted by the charging station, or may be related to the length of the wire.

In a step of S12, division points are determined by a user based on the respective position points on the wire. This step is a second sub-step of dividing the preset region into a plurality of target sub-regions based on the wire.

After the plurality of position points are determined, the user selects corresponding division points from the plurality of position points, so as to realize the division of the preset region based on the division points later. The division points may be specified by the user as follows: the user selects several position points through the APP on the terminal device and uses the selected position points as division points.

It should be noted that the division points determined in this step are used to implement the division of the preset region, so the number of division points determined in this step is at least two.

It should also be noted that the set of division points may be a subset of the set of position points, that is, the division points are a part of the position points selected by the user.

In a step of S13, the preset region is divided based on the division points, to determine sub-regions after division. This step is a third sub-step of dividing the preset region into a plurality of target sub-regions based on the wire. Each sub-region after division is the target sub-region.

In a step of S14, the robot is controlled to work in each sub-region. That is, after division is completed, the robot also works in each sub-region.

After determining the division points specified by the user, the preset region is divided according to the division points to obtain sub-regions within the preset region. When the robot needs to perform a mowing task, the robot is controlled to work in the sub-region corresponding to the mowing task to perform the mowing task.

As a preferred embodiment, there is at least a section of the wire with a preset length on the boundary of each sub-region. That is, each target sub-region contains a respective section of the wire.

Considering that when the preset region is divided into sub-regions as mentioned above, if there is no wire on the boundary of a sub-region, when the robot works in this sub-region, the robot cannot sense the boundary signal and/or positioning signal on the wire, and thus cannot position the robot, nor can it monitor the working condition of the robot in this sub-region.

Therefore, in this embodiment, when dividing the sub-regions, the principle to be followed is as follows. It is ensured that there is at least a section of wire with a preset length on the boundary of each sub-region after division, so as to ensure that when the robot works in each sub-region, the boundary signal and/or positioning signal of the wire on the boundary of the sub-region can be sensed, and then the robot can be positioned and monitored according to the sensing result.

As a preferred embodiment, a method for ensuring that there is at least a section of wire with a preset length on the region boundary of each sub-region may be as follows. The dividing lines are generated according to the respective division points, and each sub-region is obtained according to the respective dividing lines. It is determined whether there is a section of wire with a preset length on the boundary of each sub-region. If so, there is no need to process this sub-region. If there is no wire or the length of the wire is less than the preset length, the sub-region where there is no wire or the length of the wire is less than the preset length is merged with the adjacent sub-region, so as to determine that the boundary of each sub-region finally divided include at least a section of wire with the preset length.

It can be seen that, in this embodiment, by including at least a section of wire with a preset length on each sub-region, it can be ensured that the robot can sense the boundary signal and/or positioning signal on the wire when working in each sub-region.

It should be noted that when the preset region is divided according to the division points, the dividing line/dividing trajectory must at least pass through the division points. In addition, the dividing line/dividing trajectory must at least pass through the preset region, and the number of sub-region is at least one.

In summary, in the region division method in this embodiment, the wire is set so that the robot only needs to move along the wire and does not need to move in the entire preset region, which reduces the workload of the robot and improves the efficiency of region division. Moreover, there is no need to use radar or other positioning apparatus on the robot, avoiding external interference and improving the accuracy of the region division results. In addition, this embodiment can also realize division of various types of sub-regions according to user needs, meeting various needs of users.

Based on the above embodiments: as a preferred embodiment, dividing the preset region based on the division points and determining each sub-region after division includes:
connecting the division points based on a generation order of the division points to determine each sub-region within the preset region after the division points are connected.

Specifically, in this step, when there are multiple division points, the division points may be connected according to the generation order of each division point, and then a corresponding dividing line (the line connecting the division points is the dividing line) may be generated, so as to realize the division of the preset region according to this dividing line to obtain each sub-region.

For example, if the user draws three division points within a preset time threshold through an APP on the terminal device, and if the gesture action is to draw continuously from A to B to C, the connection of the division points is A-B-C. If the gesture action is to draw continuously from A to B, and then draw continuously from A to C, the connection of the division points is A-B, A-C. Other situations can be referred to by analogy. In addition, when there are multiple pairs of division points, the connection can be directly realized after the user finish drawing. When there are other division points, incorrect connection of the division points will not occur. For example, once a line A-B is drawn, the respective division points are connected directly.

It should be noted that in this step, after determining the division points, the dividing line may be formed by connecting the division points, such as a straight line, a polyline, a curve, or any combination thereof. The dividing line may be used to divide the region map (within the preset region) to obtain the divided sub-regions, where the more division points there are, the more sub-regions there are.

It can be seen that in this embodiment, each division point is connected in sequence to achieve division of the preset region, and each sub-region is obtained. The division point connection rule is clear, so that the preset region can be accurately divided.

As a preferred embodiment, determining division points specified by a user based on the position points on the wire includes:
receiving a drawing trajectory of the user to determine whether the drawing trajectory passes over the wire; and
in response to determining that the drawing trajectory does not pass over the wire, extending the drawing trajectory automatically until the drawing trajectory intersects with the wire, and determining an intersection point between the drawing trajectory and the wire as a division point.

If a user draws a line on a region map of a preset region displayed on an APP of a terminal device, and intends to use the intersection of the drawing trajectory and the wire on the region map as a division point, it is possible that the drawing trajectory input by the user is within the internal region enclosed by the wire and has no intersection with the wire. In this case, a division point cannot be generated based on the user's drawing trajectory, and the division of the preset region cannot be completed.

To solve the above technical problem, after receiving the user's drawing trajectory, this embodiment will also determine whether the drawing trajectory input by the user intersects with the wire. If so, the intersection of the drawing trajectory and the wire is determined as the division point, and the method proceeds to the step of connecting the division points based on the generation order of the division points, to determine each sub-region within the preset region after the division points are connected. Otherwise, it is determined that the division points cannot be directly determined based on the drawing trajectory. In this case, the drawing trajectory input by the user is automatically extended, specifically, both ends of the drawing trajectory are automatically extended outward until they intersect with the wire, and the intersection is determined as the division point.

It should be noted that if the user's drawing trajectory is a straight line or a polyline, the two ends of the straight line or polyline can be directly extended to intersect with the wire. If the user's drawing trajectory is a curve, the two ends of the drawing trajectory can be automatically extended (a straight line tangent to the two ends of the drawing trajectory is generated, and the drawing trajectory is extended along the tangent straight line until it intersects with the wire).

It should also be noted that, there may be only one intersection between the drawing trajectory input by the user and the wire. However, if the preset region needs to be divided, at least two division points are required to realize the division function. Therefore, when determining whether the drawing trajectory input by the user intersects with the wire, it can be determined whether the number of intersection points between the drawing trajectory input by the user and the wire is less than two. If it is less than two, the method may proceed to the step of automatically extending the drawing trajectory until it intersects with the wire and determining the intersection point between the drawing trajectory and the wire as the division point, or a prompt message may be output. This prompt message is used to prompt that there is only one intersection point, and it is impossible to achieve region division within the preset region.

In summary, by automatically extending the drawing trajectory that does not intersect the wire until it intersects the wire, this embodiment eliminates the risk that the absence of an intersection between the drawing trajectory and the wire will prevent the generation of division points according to the user's drawing trajectory and consequently, the division of the preset region.

As a preferred embodiment, the drawing trajectory includes a straight line, a polyline, a curve, or any combination thereof.

Extending the drawing trajectory automatically until the drawing trajectory intersects with the wire includes:
when the drawing trajectory is a straight line, extending both ends of the straight line directly until they intersect with the wire;
when the drawing trajectory is a curve, determining whether a maximum curvature of the curve is greater than a preset curvature threshold;
in response to determining the maximum curvature being greater than the preset curvature threshold, obtaining two endpoints of the curve, generating a straight line passing the two endpoints respectively, and further extending the straight line to intersect with the wire; and
in response to determining the maximum curvature being less than or equal to the preset curvature threshold, generating a straight line tangent to a position of the maximum curvature, and further extending the straight line to intersect with the wire.

Specifically, the drawing trajectory input by the user may be a straight line, a polyline, a curve, or any combination thereof, which is not limited in this embodiment. If the user's drawing trajectory is a straight line or a polyline, the two ends of the straight line or polyline can be directly extended to intersect with the wire.

If the user's drawing trajectory is a curve, the curvature of the drawing trajectory may be greater than the preset curvature threshold, which may causes that automatic extension of the two ends of the drawing trajectory does not lead to intersection with the wire, or the dividing line generated by automatically extending the two ends of the drawing trajectory outwardly to intersect with the wire divides the preset region into sub-regions that do not include the wire. When the robot works in this sub-region that does not include the wire, it cannot sense the boundary signal on the wire and/or cannot detect the position of the robot.

Therefore, in this embodiment, when it is determined that the drawing trajectory is a curve and does not intersect with the wire, a method for dividing the preset region is provided. Specifically, the maximum curvature of the curve is obtained, and it is determined whether the maximum curvature of the curve is greater than the preset curvature threshold. If not, a straight line tangent to the position of the maximum curvature is generated, and the straight line is further extended to intersect with the wire. The straight line tangent to the position of the maximum curvature is used as the dividing line of the preset region to achieve division of the preset region. If the maximum curvature is greater than the preset curvature threshold, the two endpoints of the curve are obtained, and a straight line passing the two endpoints is directly generated. The straight line is further extended to intersect with the wire, and the straight line passing the two endpoints is used as the dividing line of the preset region to realize the division of the preset region.

In the above method, when the drawing trajectory is a curve, a straight line corresponding to the drawing trajectory is generated according to the maximum curvature of the drawing trajectory, and this straight line is used as the dividing line. The intersection of this straight line and the wire is determined as the division point, and the curve drawing trajectory is converted into a straight dividing line. It can also avoid the bending of the dividing trajectory due to the error caused by the user when manually entering the straight drawing trajectory on the APP.

In summary, when the drawing trajectory is a curve, the method provided in this embodiment can automatically generate a straight line (new dividing line) corresponding to the curve drawing trajectory, thereby realizing the division of the preset region.

As a preferred embodiment, dividing the preset region based on the division points includes:
receiving movement of the division points by the user, and prompting the user to confirm a movement position after the movement; and
dividing the preset region based on the confirmed movement position.

Further, after the user determines the division points, if the user's target demand changes, or the positions of the originally determined division points deviate from the target positions, the positions of the division points need to be adjusted so that the positions of the adjusted division points are at the target positions, or when the preset region is divided according to the adjusted division points, the changed target demand is met.

Therefore, in this embodiment, when dividing the preset region, if the user moves the division points (for example, the user operates the APP interface to implement the user's instruction input to move the division points), it is determined that the user needs to move the division points, and the division point moving operation corresponding to the moving instruction input by the user is executed. After the division points move, the user is prompted to confirm the movement position. If the user confirms, the division of the preset region is performed based on the moved division points.

Prompting the user to confirm the movement position may be implemented by displaying prompt information (such as pop-up window or text) to remind the user to confirm the movement position. The user can confirm the movement position by the following manner. A confirmation option is provided, and it is determined whether the user's selection of the confirmation option is received. If received, it is determined that the user has determined the movement position, and then the method proceed to the step of dividing the preset region based on the moved position.

The user can move the division points in the following ways: the user selects the division points to be moved in the APP, and the selected division points are displayed in a preset manner, a movement option is provided, such as the movement option including several moving directions and several moving distances. Alternatively, the division points displayed in a preset manner may be dragged to move the division points.

In summary, in this embodiment, after the user determines the division points, the division points can be moved to meet various needs of the user. The division points are highly operable, which facilitate to adjust the division of the preset region.

As a preferred embodiment, the method further includes:
receiving selection of the division point by the user, displaying the selected division point in a preset manner, and providing a deletion option; and
in response to receiving a selection of the deletion option by the user, deleting the drawing trajectory where the division point is located.

Further, after the user determines each division point, if the user's target demand changes and some of the division points need to be deleted, the user's selection of the division point is received at this time, and the selected division point is further displayed in a preset manner, and a deletion option is provided. When the user selects this deletion option, it is determined that the user needs to delete the selected division. In this case, the division point and the drawing trajectory where the division point is located are deleted, and the division of the preset region is realized based on other division points that have not been deleted.

The user may select the division point in the following manner: the user operates the display interface of the APP to select a certain division point or select an identifier corresponding to a certain division point, such as a serial number.

Displaying the selected division point in a preset manner may be: the selected division point/the serial number corresponding to the selected division point is highlighted, or the selected division point/the serial number corresponding to the selected division point is displayed by enlarging it by a preset factor, or the selected division point/the serial number corresponding to the selected division point is set to a preset color, which is not limited in this embodiment.

The drawing trajectory may or may not be displayed on the APP interface. It should be understood that the drawing trajectory exists regardless of whether it is displayed or not. In a specific embodiment, the drawing trajectory may not be displayed by default except for the first time the user inputs the drawing trajectory. When the user selects the division points corresponding to the drawing trajectory, in addition to displaying the division points in a preset manner, the drawing trajectory corresponding to the division points may also be displayed in another preset manner to facilitate user observation.

In summary, in the method of this embodiment, after the user determines the division points, the division points can be deleted to meet various needs of the user. The division points are highly operable, which facilitate to adjust the division of the preset region.

As a preferred embodiment, after dividing the preset region based on the division points and determining each sub-region after division, the method further includes:
setting corresponding work attributes for each sub-region.

Further, due to the differences in the environment or road conditions of each sub-region, the robot may have different working modes when working in each sub-region, and needs to perform work tasks in each sub-region in a working mode corresponding to each sub-region.

Therefore, in this embodiment, a corresponding work attribute is set for each sub-region. For example, the work attribute includes the type of each sub-region and the working parameters of the robot when working in each sub-region. For example, the sub-regions include two types: working region and non-working region. When the robot is a mowing robot, the working parameters may include but are not limited to mowing parameters, such as mowing speed, mowing height, number of mowing times in a region, mowing speed, and the like. The working region may also include attributes corresponding to mowing parameters. In addition, the attributes may be specified bytag association, and each tag is associated with a respective sub-region.

Based on the setting of work attributes in each sub-region, when the robot is working, the region map of the preset region including the work attributes is sent to the robot, and the robot performs the work tasks in the working region with corresponding working parameters according to the region map and the work attributes of each sub-region.

In this embodiment, the primary objective is to enable the robot to perform work tasks in a corresponding region according to pre-set work attributes. The control method for the robot is simple and clear.

As a preferred embodiment, after dividing the preset region based on the division points, and determining each sub-region after division, the method further includes:
determining whether the work attributes of the two adjacent sub-regions are the same and whether the area of one of the sub-regions is smaller than a preset threshold; and
in response to the work attributes being the same and the area of one of the sub-regions being smaller than the preset threshold, merging the two adjacent sub-regions into a same region.

Further, based on the fact that the work attributes of the above-mentioned sub-regions have been set and the user has divided the preset region into sub-regions, there may be two adjacent sub-regions with the same work attributes. For example, sub-region A and sub-region B are adjacent and are both working regions, and the time and specie of grass planting are the same. In this case, if the robot performs mowing tasks in sub-region A and then in sub-region B, the robot needs to move a longer route, resulting in lower mowing efficiency and greater damage to the lawn.

In addition, it is also considered that if the work attributes of two adjacent sub-regions are the same, but the areas of the two sub-regions are both larger than the preset threshold, then the combined area after the two sub-regions are merged is greater than at least twice the preset threshold. This causes the working region of the robot too large for the robot to handle efficiently.

Therefore, in this embodiment, it is also determined whether the work attributes of two adjacent sub-regions are the same, and whether there is a sub-region with an area smaller than a preset threshold among the two adjacent sub-regions with the same work attributes. If the work attributes are the same and the area of one of the sub-regions is smaller than the preset threshold, the two adjacent sub-regions are merged to become one region. Then, when the robot needs to work in the sub-regions, the robot can be controlled to work in the merged region.

As a preferred embodiment, the method further includes:
in response to a subdivision being required in the sub-region, firstly receiving selection of the sub-region to be subdivided by the user, and then determining the division points specified by the user based on each position point on the wire in the subdivided sub-region.

Further, after the user has completed the division of the preset region to obtain various sub-regions, if the user's target demand change and the divided sub-regions need to be further divided, the user's selection of the sub-region to be subdivided is first received, and then the division points specified by the user are determined on the selected sub-region, and the sub-region is divided based on the division points on the sub-region to obtain the subdivided sub-regions.

The user may select the sub-region to be subdivided as follows: the user selects a sub-region on the APP interface, and the selected sub-region can be displayed in grayscale, so that the user can intuitively see whether the selected sub-region is the target sub-region. In addition, the method of determining the division points specified by the user based on the respective position points on the wire in the subdivided sub-regions is the same as the method of determining the division points in the above embodiment, and this embodiment will not be described in detail here.

In the method of this embodiment, after the user determines each sub-region, the sub-region can be further divided to meet various needs of the user, and the operability of the region division is strong.

As a preferred embodiment, controlling the robot to work in each sub-region includes:
controlling the robot to move in the working region according to a preset walking strategy to perform the mowing task.

Specifically, the process of robot walking may include: the robot first moves to a position point of the wire, then moves a certain distance along the moving direction of the wire to another position point of the wire, and then moves from another position point of the wire to a position point in the opposite direction of the position point, and so on, until the preset walking strategy is completed.

The process of moving a certain distance along the moving direction of the wire to another position point of the wire may include: after touching the wire, the robot directly rotates a certain angle and walks a preset distance to reach another position point, and then moves in a zig-zag path until the robot completes the work in all working regions.

As a preferred embodiment, controlling the robot to move in the working region according to the preset walking strategy further includes: determining whether the robot has reached the expected position point preset in the preset walking strategy. If the robot has not reached the expected position point, the robot triggers the supplementary mowing instruction and performs supplementary mowing processing on the expected position point and related areas according to the supplementary mowing instruction. It can be seen that through this method, in addition to accurately controlling the robot to move according to the preset working path, it can also determine whether there is any deviation from the path during the robot's movement, thereby improving the accuracy of the robot's movement process.

The method of performing supplementary mowing processing on the expected position point and the related area according to the supplementary mowing instruction may be: controlling the robot to move from the current deviated position to the desired position point; controlling the robot to move from the desired position point to the previous position point of the desired position point according to the working path. Alternatively, the robot is controlled to move directly from the current deviated position to the previous position of the desired position.

The robot can also perform the following steps during the supplementary mowing process: determining in real time whether the robot is mowing; if not, controlling the robot to move to the desired position point or the previous position point, and then controlling the robot to move along the working path. In a specific embodiment, a sensor or other detection element may be provided on the bottom shell of the mower or on the mowing tool to detect whether the mowing tool is still mowing. If it is detected that the mowing tool is still mowing, it means that the current region needs to be re-mowed; if it is detected that the mowing tool can no longer cut the grass, it means that the current region has been mowed, and it is determined that the re-mowing is completed. In another embodiment, if a grass collecting box is installed on the mower to collect grass cut by the mower, it can be detected whether the grass collecting box is continuously collecting grass (such as detecting whether the weight of the grass collecting box is continuously increasing through a weight sensor). If so, it means that the current region of the mower is a missed mowing region, and if not, it means that the mower has completed the supplementary mowing in the current region.

It can be seen that the method in this embodiment can detect in real time whether the supplementary mowing of the missed mowing region is completed, and when it is determined that the supplementary mowing is completed, the supplementary mowing operation is ended, and the relevant steps of walking according to the working path are continued to be executed, so as to avoid the robot executing steps related to the supplementary mowing operation after completing the supplementary mowing.

An embodiment of the present disclosure provides a robot, including:
a first processing unit configured to determining a preset region based on a pre-arranged wire; and
a second processing unit configured to dividing the preset region into a plurality of target sub-regions based on the wire, where each target sub-region contains a respective section of the wire.

Specifically, when executing the method in the first embodiment, as shown in FIG. 8, the robot includes:
a processing unit 701, including the first processing unit and the second processing unit configured to determining a preset region based on a pre-arranged wire, and dividing the preset region into a plurality of target sub-regions based on the wire, where each target sub-region contains a respective section of the wire; and
a cutting unit 702, connected to the processing unit and configured for performing a mowing operation in each target sub-region.

The processing unit here is the control module in the above embodiment. The processing unit can control the relevant execution modules of the mowing robot to perform operations such as rotation, forward movement, backward movement, and mowing according to the various implementations of the above embodiment and the information provided by the sensing module. Specifically, the operations of rotation, forward movement, backward movement and the like may be performed by the driving module of the above embodiment, and the mowing operation may be performed by the above cutting unit (or cutting module).

It should be noted that the processing unit does not perform specific operations such as rotation, forward movement, backward movement, and mowing, but decides to let the actuators (including but not limited to the driving module and the cutting module) of the mowing robot perform specific operations such as rotation, forward movement, backward movement, and mowing through the various implementations of the above embodiments and the information provided by the sensing module, and controls the execution of the actuators. In this embodiment, the processing unit obtains the preset region by controlling the driving module to travel along the edge. Then, the processing unit divides the preset region into a plurality of target sub-regions through various specific implementations, where each target sub-region contains a respective section of a wire. After the processing unit completes the division of the target sub-regions, it can control the driving module to move the mowing robot to each target sub-region, and control the cutting unit in each target sub-region to achieve mowing operations.

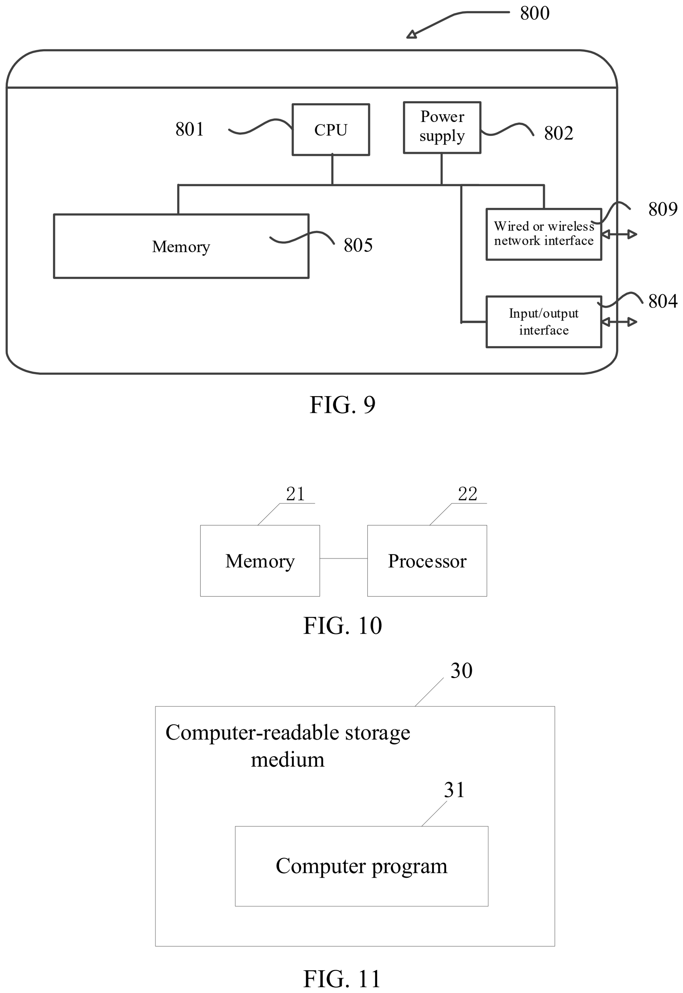

FIG. 9 is a schematic structural diagram of a mowing robot provided in an embodiment of the present disclosure. The mowing robot 800 may include one or more central processing units (CPU) 801 and a memory 805. The memory 807 stores one or more application programs or data.

The memory 805 may be a volatile storage or a persistent storage. The program stored in the memory 805 may include one or more modules, and each module may include a series of instruction operations for the mowing robot. Further, the central processing unit 801 may be configured to communicate with the memory 805 to execute a series of instruction operations in the memory 805 on the mowing robot 800.

The mowing robot 800 may also include one or more power supplies 802, one or more wired or wireless network interfaces 803, one or more input and output interfaces 804, and/or one or more operating systems, such as Windows Server^{™}, Mac OS X^{™}, Unix^{™}, Linux^{™}, FreeBSD^{™}, and the like.

The central processing unit 801 can execute the operations performed by the mowing robot in the embodiments shown in FIG. 1 to FIG. 8 above, and the details will not be repeated here.

When executing the method in the second embodiment of the present disclosure, please refer to FIG. 10, which is a structural block diagram of a region division apparatus provided by the present disclosure, the apparatus including:
a memory 21 configured to storing computer programs; and
a processor 22 configured to implementing steps in the abovementioned region division method when executing the computer programs. For the introduction of the region division apparatus, please refer to the above-mentioned second embodiment, and the present disclosure will not go into details here.

To solve the above technical problems, the present disclosure further provides a computer-readable storage medium 30. Please refer to FIG. 11. FIG. 11 is a structural block diagram of a computer-readable storage medium provided by the present disclosure. A computer program 31 is stored on the computer-readable storage medium 30. When the computer program 31 is executed by the processor, the steps of any of the above-mentioned region division methods are implemented. For the introduction of the computer-readable storage medium 30, please refer to the above embodiment, and the present disclosure will not go into details here.

It should be noted that, in this specification, relational terms such as first and second and the like are merely used to distinguish one entity or operation from another entity or operation, and do not necessarily require or imply any actual relationship or order between these entities or operations. Moreover, the terms "comprise", "include" or any other variations thereof are intended to cover non-exclusive inclusion, such that a process, method, article, or apparatus that includes a list of elements includes not only those elements but also other elements not expressly listed, or also includes elements inherent to such process, method, article, or apparatus. In the absence of more restrictions, an element defined by the phrase "including a..." does not exclude the existence of other identical elements in the process, method, article or apparatus including the element.

The above description of the disclosed embodiments enables those skilled in the art to implement or use the present disclosure. Various modifications to these embodiments will be readily apparent to those skilled in the art, and the general principles defined herein may be implemented in other embodiments without departing from the gist or scope of the present disclosure. Thus, the present disclosure will not be limited to the embodiments shown herein but will be accorded the widest scope consistent with the principles and novel features disclosed herein.

Those skilled in the art can clearly understand that, for the convenience and brevity of description, the above-described systems, units and specific working processes of the units can refer to the corresponding processes in the above method embodiments and will not be repeated here.

In several embodiments provided in the present disclosure, it should be understood that the disclosed systems, apparatuses and methods may be implemented in other ways. For example, the apparatus embodiments described above are merely illustrative. For example, the division of the units is merely a logical function division. There may be other division methods in actual implementation. For example, multiple units or components may be combined or integrated into another system, or some features may be ignored or not executed. Another point is that the mutual coupling or direct coupling or communication connection shown or discussed may be an indirect coupling or communication connection through some interfaces, apparatuses, or units, which may be electrical, mechanical, or other forms.

The units described as separate components may or may not be physically separated, and the components shown as units may or may not be physical units, that is, they may be located in one place or distributed over multiple network units. Some or all of the units may be selected according to actual needs to achieve the purpose of the solution of the embodiment.

In addition, each functional unit in each embodiment of the present disclosure may be integrated into one processing unit, or each unit may exist physically separately, or two or more units may be integrated into one unit. The above integrated unit can be implemented in the form of hardware or in the form of software functional unit.

If the integrated unit is implemented in the form of a software functional unit and sold or used as an independent product, it can be stored in a computer-readable storage medium. Based on this understanding, the technical solution of the present disclosure, essentially or the part that makes contribution to the existing technology, or the entire technical solution, can essentially be embodied in the form of a software product. The computer software product is stored in a storage medium and includes several instructions for enabling a computer device (which can be a personal computer, a server, or a network device, or the like) to execute all or part of the steps of the method described in each embodiment of the present disclosure. The storage medium includes: Various media that can store program codes, such as USB flash drives, mobile hard disks, read-only memory (ROM), random access memory (RAM), magnetic disks or optical disks.

An embodiment of the present disclosure further provides a computer program product including instructions. When the computer program product is executed on a computer, the computer is caused to execute the above mowing control method.

## Claims

1. A region division method, comprising:
determining a preset region based on a pre-arranged wire; and
dividing the preset region into a plurality of target sub-regions based on the wire, wherein each of the target sub-regions contains a respective section of the wire.

2. The method according to claim 1, wherein after dividing the preset region into a plurality of target sub-regions, the method further comprises:
performing a mowing operation in each target sub-region.

3. The method according to claim 1 or 2, wherein the dividing the preset region into a plurality of target sub-regions comprises:
dividing the preset region into a plurality of initial sub-regions;
in response to any one of the plurality of initial sub-regions meeting a preset merging condition, merging the any one of the plurality of initial sub-regions with at least one adjacent initial sub-region to define a target sub-region; and
determining the plurality of initial sub-regions, excluding the any one of the plurality of initial sub-regions and the at least one adjacent initial sub-region, as target sub-regions.

4. The method according to claim 3, wherein the dividing the preset region into a plurality of initial sub-regions comprises:
determining a first direction and a second direction, wherein the first direction is perpendicular to the second direction; and
dividing the preset region for multiple times along the first direction, and dividing the preset region for multiple times along the second direction to obtain the plurality of initial sub-regions.

5. The method according to any one of claims 2 to 4, wherein after dividing the preset region into a plurality of target sub-regions and before performing a mowing operation in each target sub-region, the method further comprises:
determining whether the target sub-regions meet a preset adjustment condition; and
adjusting the target sub-regions in response to the target sub-regions meeting the preset adjustment condition.

6. The method according to any one of claims 1 to 5, wherein the dividing the preset region into a plurality of target sub-regions based on the wire comprises:
determining a first direction and a second direction, wherein the first direction is perpendicular to the second direction; and
dividing the preset region once along the first direction, and dividing the preset region at least once along the second direction to obtain the plurality of target sub-regions.

7. The method according to any one of claims 2 to 6, wherein the performing a mowing operation in each target sub-region comprises:
performing a mowing operation in each target sub-region in a zig-zag path, wherein a mowing direction in each target sub-region is parallel to a long side corresponding to each target sub-region.

8. The method according to any one of claims 1 to 7, further comprising:
in response to any one of the plurality of target sub-regions being not in a rectangle shape, constructing a minimum enclosing rectangle of the any one of the plurality of target sub-regions; and
determining a long side of the minimum enclosing rectangle of the any one of the plurality of target sub-regions to be a long side corresponding to the respective target sub-region.

9. The method according to any one of claims 2 to 8, wherein the performing a mowing operation in each target sub-region comprises:
according to distribution of the wire in each target sub-region, determining a first direction or a second direction as a mowing direction of each target sub-region; and
performing a mowing operation in each target sub-region according to the mowing direction.

10. The method according to claim 1, wherein the method is applied to a robot, and the determining a preset region based on a pre-arranged wire comprises:
controlling the robot to move along the wire for at least one circle to determine the preset region; and
the dividing the preset region into a plurality of target sub-regions based on the wire comprises:
determining position points on the wire;
determining division points specified by a user based on the respective position points on the wire; and
dividing the preset region based on the division points to determine a plurality of sub-regions after division, wherein the sub-regions are the target sub-regions; and
wherein, after dividing the preset region into a plurality of target sub-regions, the method further comprises:
controlling the robot to work in each sub-region.

11. The region division method according to claim 10, wherein the dividing the preset region based on the division points to determine a plurality of sub-regions after division comprises:
connecting the division points based on a generation order of the division points to determine each sub-region within the preset region after connecting the division points.

12. The region division method according to claim 10 or 11, wherein the determining division points specified by a user based on the respective position points on the wire comprises:
receiving a drawing trajectory from the user to determine whether the drawing trajectory passes over the wire; and
in response to determining that the drawing trajectory does not pass over the wire, extending the drawing trajectory automatically until the drawing trajectory intersects with the wire, and determining an intersection point between the drawing trajectory and the wire as the respective division point.

13. The region division method according to claim 12, wherein the drawing trajectory comprises a straight line, a polyline, a curve, or any combination thereof;
the extending the drawing trajectory automatically until the drawing trajectory intersects with the wire comprises:
in response to the drawing trajectory being the straight line, extending both ends of the straight line directly until they intersect with the wire;
in response to the drawing trajectory being the curve, determining whether a maximum curvature of the curve is greater than a preset curvature threshold;
in response to determining the maximum curvature being greater than the preset curvature threshold, obtaining two endpoints of the curve, generating a straight line passing the two endpoints, and further extending the straight line to intersect with the wire; and
in response to determining the maximum curvature being less than or equal to the preset curvature threshold, generating a straight line tangent to a position of the maximum curvature, and further extending the straight line to intersect with the wire.

14. The region division method according to any one of claims 10 to 13, wherein the dividing the preset region based on the division points comprises:
receiving movement of the division points by the user, and prompting the user to confirm movement positions after the movement; and
dividing the preset region based on the confirmed movement positions.

15. The region division method according to claim 12 or 13, further comprising:
receiving selection of the division points by the user, displaying the selected division points in a preset manner, and providing a deletion option; and
in response to receiving a selection of the deletion option from the user, deleting the drawing trajectory where the division points are located.

16. The region division method according to any one of claims 10 to 15, wherein after dividing the preset region based on the division points to determine a plurality of sub-regions after division, the method further comprises:
setting corresponding work attributes for the sub-regions.

17. The region division method according to any one of claims 10 to 16, wherein after dividing the preset region based on the division points to determine a plurality of sub-regions after division, the method further comprises:
determining whether the work attributes of two adjacent sub-regions are the same and whether an area of one of the two adjacent sub-regions is smaller than a preset threshold; and
in response to the work attributes of the two adjacent sub-regions being the same and the area of one of the two adjacent sub-regions being smaller than the preset threshold, merging the two adjacent sub-regions into a same region.

18. The region division method according to any one of claims 10 to 17, further comprising:
in response to a subdivision being required in a sub-region among the sub-regions, firstly receiving selection of the sub-region to be subdivided from the user, and then determining division points specified by the user based on the respective position points on the wire in the sub-region to be subdivided.

19. A robot, comprising:
a first processing unit configured to determine a preset region based on a pre-arranged wire; and
a second processing unit configured to divide the preset region into a plurality of target sub-regions based on the wire, wherein each of the target sub-regions contains a respective section of the wire.

20. A region division apparatus, comprising:
a second memory configured to store computer programs; and
a second processor configured to implement the region division method according to any one of claims 1 to 18 when executing the computer programs.

21. A computer-readable storage medium having instructions stored therein, wherein the instructions, when executed on a computer, cause the computer to perform the method according to any one of claims 1 to 18.
